# EUROPÄISCHE PATENTSCHRIFT

(11) **EP 0 949 700 B1**
(45) Veröffentlichungstag und Bekanntmachung des Hinweises auf die Patenterteilung: **13.06.2001**
(21) Anmeldenummer: 98100058.1
(22) Anmeldetag: 05.01.1998
(51) Int. Cl.: H01M 4/00, H01M 4/21, H01M 4/20

(54) **Verfahren und Vorrichtung zur Herstellung von Bleiplatten für Bleiakkumulatoren**
Process and apparatus for the manufacture of lead plates for lead-acid batteries
Procédé et appareil pour la fabrication de plaques de plomb pour accumulateurs au plomb

(43) Veröffentlichungstag der Anmeldung: 13.10.1999
(73) Patentinhaber: Accumulatorenwerke Hoppecke Carl Zoellner & Sohn GmbH & Co. KG, 59914 Brilon (DE)
(72) Erfinder: Nitsche, Werner Dr., 58559 Lippstadt (DE); Lahme, Norbert, 59929 Brilon (DE)
(74) Vertreter: Stenger, Watzke & Ring Patentanwälte

(56) Entgegenhaltungen:
- DE-A- 2 828 455
- DE-B- 1 111 684
- US-A- 2 130 246
- US-A- 2 656 399
- US-A- 4 713 304

## Beschreibung

Die vorliegende Erfindung betrifft ein Verfahren zur Herstellung von Bleiplatten für Bleiakkumulatoren, wobei im wesentlichen gitterförmige Bleielektroden mit einer pastösen, aktiven Masse versehen werden, wobei die Platten bei jeweils festgelegten umwelt parametern wie Zeit, Luftfeuchtigkeit, Temperatur und/oder relative Luftbewegung und bei jeweils weniger als 6 Std. in einem kontinuierlichen Durchlauf in drei voneinander getrennten Bereichen einen Reifungsprozeß unter Feuchtigkeitszuführung, einen Vortrocknungsprozeß zur Reduzierung des freien Bleis in den pastösen Massen und anschließend einen Endtrocknungsvorgang durchlaufen. Die Erfindung betrifft weiterhin eine Vorrichtung zum Herstellen von Bleiakkumulatoren.

Es ist bekannt, zur Herstellung von Bleiakkumulatoren zunächst im wesentlichen gitterförmige Bleielektroden herzustellen. Diese entstehenden Platten mit vorgegebenen Abmessungen werden mit einer sogenannten aktiven Masse versehen, die in die Maschen des Gitters eingestrichen wird und einem Reife- und Trockenprozeß unterzogen werden. In bekannter Weise werden aus den Platten unter Zwischenlegung von Trennmaterial Stapel gebildet, wobei eine bestimmte Anzahl von Platten einen Zellenblock bilden. Diese Platten eines Zellenblockes werden elektrisch miteinander verbunden. Mehrere Zellenblöcke werden in entsprechende Gehäuse eingesetzt, ebenfalls entsprechend elektrisch verbunden und schließlich an einen positiven bzw. negativen Pol angeschlossen. Der Akkumulator muß dann mit Säure befüllt und geladen werden. Die Lagerung und der Transport können in unterschiedlichen Zuständen stattfinden, beispielsweise werden die Platten in Tanks zuvor geladen, dann gewaschen und getrocknet und in diesem Zustand zu einem Bleiakkumulator zusammengebaut. Der Akkumulator befindet sich in einem ungefüllten, geladenen Zustand. Er kann auch im gefüllten und geladenen Zustand gelagert bzw. transportiert werden.

Bei den in die Gitter einzubringenden Massen handelt es sich um eine breiige, pastöse Masse, die unter Abgabe von Feuchtigkeit reifen muß. Dies geschieht durch langsame Wasserabgabe über mehrere Stunden. Durchschnittlich kann ein Reifungsprozeß bis zu 48 Std. in Anspruch nehmen und wird gewöhnlich in sogenannten Reifekammern durchgeführt.

Dieses Reifungserfordernis steht den Bemühungen zur Automatisierung des Herstellungsverfahrens von Bleiakkumulatoren möglichst im On-line-Betrieb entgegen.

Herkömmlicherweise ist es bekannt, die Bleielektroden mit der aktiven Masse zu versehen, zu stapeln und zum Reifen abzulagern. Die fertig gereiften und getrockneten Bleielektroden werden dann wieder in den Verarbeitungsprozeß eingeführt, mit Trennmaterialien/Separatoren versehen, gestapelt und zur Herstellung des Akkumulators in der oben beschriebenen Weise weiterverarbeitet. Wird die Reifungsphase verkürzt oder unvollständig durchgeführt, kann dies die späteren elektrischen Eigenschaften des Akkumulators erheblich beeinträchtigen.

Wenngleich schon verschiedene Vorschläge für die Integration des Herstellungsverfahren für Bleiplatten in das Gesamtherstellungsverfahren für Bleiakkumulatoren vorgegeben wurden, ist zum gegenwärtigen Zeitpunkt kein Verfahren bekannt, mit welchem eine erhebliche Verkürzung der Reifungszeit von positiven und/oder negativen Bleiplatten möglich ist, ohne daß die Plattenqualität und die Gleichmäßigkeit der Qualität darunter leiden.

Ausgehend von diesem Stand der Technik liegt der vorliegenden Erfindung die **Aufgabe** zugrunde, ein Verfahren zur Herstellung von Bleiplatten für Bleiakkumulatoren anzugeben, welches bei Gewährleistung einer gleichmäßigen und sehr guten Plattenqualität eine erhebliche Reduzierung der Reifungszeit und damit eine Integration des Herstellungsprozesses in kontinuierliche Fertigungsverfahren ermöglicht.

Darüber hinaus ist es Aufgabe der vorliegenden Erfindung, eine Vorrichtung zur Herstellung von Bleiplatten für Bleiakkumulatoren bereitzustellen, welche die Durchführung des genannten Verfahrens ermöglicht.

Verfahrensseitig wird zur technischen **Lösung** dieser Aufgabe vorgeschlagen, ein Verfahren zur Herstellung von Bleiplatten für Bleiakkumulatoren der eingangs genannten Art, wobei der Vortrocknungsprozeß bei gegenüber dem Reifungsprozeß verringerter Luftfeuchtigkeit erfolgt, wobei beide Plattenoberflächen für eine gleichmäßige Behandlung freiliegend gehalten werden und wobei beide Oberflächen der Platten mit einer klimawirksamen Membran versehen werden.

Unter klimawirksamer Membran im Sinne der vorliegenden Erfindung wird verstanden, daß die Plattenoberflächen von einem Material abgedeckt werden, welches Feuchtigkeit transportieren und speichern kann und darüber hinaus die Plattenoberfläche gegen direkte Luftbewegung abschirmt. Dadurch wird direkt auf der Plattenoberfläche ein Mikroklima erzeugt, welches hinsichtlich Temperatur, Feuchtigkeitshaushalt und Luftbewegung exakt kontrollierbar und einstellbar ist. Diese Membranen können zugleich in vorteilhafterweise dazu verwendet werden, den Abstand zwischen den Oberflächen benachbarter Platten sicherzustellen, um somit eine ungehinderte Luftströmung zwischen den Platten sowie die ungehinderte Ausbildung gewünschter klimatischer Bedingungen zwischen den Platten sicherzustellen.

Durch das erfindungsgemäße Verfahren wird die gesamte Bleiplattenreifung und - trocknung in einzelne Phasen gegliedert, die jeweils hinsichtlich der Umweltbedingungen, das heißt vorzugsweise Luftfeuchtigkeit, Temperatur und/oder relative Luftbewegung, sofern erforderlich jedoch auch hinsichtlich weiterer Umweltbedingungen, und hinsichtlich der Zeitdauer, die die Bleiplatte den jeweiligen Umweltbedingungen ausgesetzt wird, optimiert sind. Dadurch kann in jeder Verfahrensphase das für diesen Vorgang jeweils optimale Ergebnis und, vor allen Dingen, in kürzester Zeit und zur Erreichung eines einheitlichen Ergebnisses gezielt wiederholbar, erreicht werden. Die Gliederung in einen Reifungsprozeß, einen Vortrocknungsprozeß und einem Endtrocknungsvorgang, wobei die Umweltbedingungen und die Aussetzzeit für jede der drei Phasen optimiert sind, ermöglicht Gesamtdurchlaufzeiten, die unter entsprechenden Umständen weniger als vier Stunden benötigen. Dadurch läßt sich das Plattenherstellungsverfahren auch in industrielle Bleiakkumulatorenfertigungen integrieren und vor allen Dingen zu einem kontinuierlichen Verfahren mit reproduzierbaren Ergebnissen hoher Qualität ausgestalten.

In Bezug auf den Reifungsprozeß werden die Umweltrandbedingungen und die Verweilzeit gemäß der Erfindung in vorteilhafter Weise vorgeschlagen. Mit besonderem Vorteil wird vorgeschlagen, daß keine Luftbewegung während des Reifungsprozesses erzeugt wird. Zwar werden die Platten gegebenenfalls bei entsprechender Verfahrenssteuerung durch einen entsprechend klimatisierten Bereich geführt, wodurch aufgrund des Vorschubes eine relative Bewegung der Platten zur Luft stattfindet, jedoch ist diese vernachlässigbar gering. Im Sinne der Erfindung soll die Luft nicht in einer noch so leichten Strömung geführt werden, sondern im wesentlichen eine stehende Luftatmosphäre erzeugt werden. In vorteilhafter Weise hat diese eine nahezu 100%ige Luftfeuchtigkeit, wozu beispielsweise Sattdampf verwendet werden kann. Dieser wird vorzugsweise über einen Bodeneinlaß in einen entsprechenden Klimabereich geführt. Die Temperatur sollte zwischen 50 - 95°C liegen. Der Reifungsprozeß, in welchem der Feuchtigkeitsgehalt in der pastösen Masse der Platte vorzugsweise auf 9 - 10% eingestellt wird, wird für etwa eine Stunde aufrechterhalten. In vorteilhafter Weise kann der Platte weitere Feuchtigkeit während des Reifungsprozesses zugeführt werden. Während des Reifungsprozesses werden definierte chemische Zusammensetzungen und Kristallgrößen im Sinne der vorliegenden Erfindung gebildet.

Der als Vortrocknung bezeichnete Prozeß ist die Verfahrensstufe, in welcher das freie Blei in den pastösen Massen der Platten reduziert wird. Dies erfolgt gemäß einem besonders vorteilhaften Verfahrensvorschlag gemäß der Erfindung durch Erzeugung einer Umluftströmung, vorzugsweise mit Frischluftzufuhr. In vorteilhafter Weise wird mit der Erfindung vorgeschlagen, den Vortrocknungsprozeß bei Temperaturen zwischen 50 und 80°C durchzuführen. Die Zeit kann gemäß einem Vorschlag der Erfindung bis zu zweieinhalb Stunden angesetzt werden. Umluftströmung und Temperatur sind so zu wählen, daß der Feuchtigkeitsgehalt der Paste von vorzugsweise 9- 10% auf 4% langsam abfällt.

In der Endtrocknungsphase wird eine Temperatur eingestellt und eine an den Platten vorbeilaufende Luftströmung erzeugt. Die Temperatur ist gemäß einem vorteilhaften Vorschlag der Erfindung um 80°C. Die Luftströmungsgeschwindigkeit wird mit zwei bis drei Metern/sec. vorgeschlagen.

Mit besonderem Vorteil der Erfindung wird vorgeschlagen, Luftströmungen gerichtet durchzuführen, das heißt, wenigstens im Verfahren der Endtrocknung die Luft direkt an den Oberflächen bzw. den Membranen entlangströmen zu lassen.

Die Endtrocknungsphase kann gemäß einem vorteilhaften Vorschlag der Erfindung für etwa 30 Min. durchgeführt werden.

Das erfindungsgemäße Verfahren stellt gegenüber dem vorbekannten Stand der Technik Vorteile in zweierlei Hinsicht bereit, nämlich einmal einen erheblichen Zeitersparnisvorteil, zum anderen wird ein reproduzierbar gleiches Ergebnis auf hohem Qualitätsniveau erreicht. Während Reifungsphasen im Stand der Technik 12 bis 18 Std. mit anschließenden Trocknungsphasen von zwei bis drei Tagen in Anspruch nehmen, erlaubt das erfindungsgemäße Verfahren Prozeßzeiten von etwa vier Stunden im günstigen Fall. Selbstverständlich können Variationen auch zu längeren Phasen führen, die jedoch nicht im Bereich von Tagen wie im Stand der Technik liegen.

Mit der Erfindung hat sich auch herausgestellt, daß die Plattenqualität gegenüber aus dem Stand der Technik bekannten Platten wegen einer besseren Gitter/Massen-Verbindung und einer höheren Massenfestigkeit verbessert werden konnte. Nach dem Verfahren hergestellte Platten sind somit ebenfalls neu.

Gemäß der Erfindung werden die Platten durch Klimabereiche geführt, wobei die Verweilzeit durch die Kombination von Wegstrecke und Vorschubgeschwindigkeit festgelegt ist. In vorteilhafter Weise werden die Platten mittels einer Tragvorrichtung hintereinander durch die aufeinanderfolgenden Klimabereiche geführt. Durch diese Maßnahme ist ein Umsetzen der Platten zwischen den verschiedenen Verfahrensstufen unnötig. Darüber hinaus ist es wichtig, daß die Platten unter dem Gesichtspunkt der zeitlichen Steuerung zur Erzielung reproduzierbarer Ergebnisse zwischen den Bereichen in kontrollierter Weise verschoben werden.

Die Platten können als Einzelplatten, aber auch in Gruppierungen verfahrensgemäß behandelt werden. Dabei können Gruppen negativer, positiver oder auch Gruppen gemischt aus negativen und positiven Platten behandelt werden, wobei die gemischten Gruppen auch zu Bestückungssätzen für Akkumulatoren zusammengestellt sein können. In vorteilhafter Weise sind die Platten mit klimawirksamen Membranen, z. B. gebildet durch angefeuchtete Abstandshalter, vorzugsweise übliche Batterieseparatoren, versehen. Diese an sich bei der Plattenherstellung übliche Maßnahme kann in vorteilhafter Weise für die Erfindung in abgewandelter Form genutzt werden. So wird vorgeschlagen, aus Separatormaterial, vorzugsweise Polyäthylen-Folie (PE-Folie) Taschen zu bilden, in welchen die Platten eingesetzt sind. Die PE-Folie weist Rippen auf, die benachbarte Platten auf Abstand halten. In vorteilhafter Weise ist die PE-Folie mit Kieselsäureeinlagerungen versehen, wodurch die PE-Folie hygroskopische Eigenschaften entwickelt. Sowohl die Verwendung der Taschen selbst als auch die Nutzung der hygroskopischen Eigenschaften wirken sich positiv auf das erfindungsgemäße Verfahren aus. In vorteilhafter Weise wird mit der Erfindung vorgeschlagen, daß die Separatoren angefeuchtet werden. So werden z. B. die pastierten Platten eingetascht und zusammen mit den Taschen in ein Flüssigkeitsbad getaucht. Die vorgetränkten Einheiten werden dann behandelt. Der zuvor befeuchtete Separator kann der Platte während des Reifungsprozesses weitere Feuchtigkeit zuführen. Umgekehrt kann das Separatormaterial während der Endtrocknung der Platte zusätzlich Feuchtigkeit entziehen. Durch die Verwendung des Separatormaterials wird der Effekt unterstützt, daß an der Plattenoberfläche praktisch ein Mikroklima ausgebildet wird, daß entweder feuchtend, trocknend oder sonstwie behandelnd wirkt.

Bei der Bildung von Stapeln zueinander beabstandeter Platten genügt es, wenn jeweils eine Sorte, also die jeweils zweite Platte getascht bzw. mit Separatormaterial versehen ist.

Die Verwendung von gerippten Separatoren in Form von Taschen bzw. Einzelseparatoren ermöglicht darüber hinaus die Führung von Luftströmungen. Dabei ist die Strömung so auszurichten und einzustellen, daß die Taschen nicht durch eine Saugwirkung die Strömung störend auseinandergesaugt werden.

Die Verwendung der Separatoren, insbesondere der Separatorentaschen, vorzugsweise aus PE-Folie, hat den besonderen Vorteil, daß die Platten nach Abschluß der Behandlung nicht mehr umgepackt werden müssen. Anderes, als klimawirksame Membran verwendetes Material müßte ansonsten entfernt und die Platten müßten für den funktionalen Einsatz mit Separatoren versehen werden.

Das erfindungsgemäße Verfahren stellt eine äußerst effektive und wirtschaftliche Maßnahme zur Herstellung von Bleiplatten für Bleiakkumulatoren dar.

Vorrichtungsseitig wird zur technischen **Lösung** der oben genannten Aufgabe vorgeschlagen, eine Vorrichtung zur Herstellung von Bleiplatten für Bleiakkumulatoren, wobei im wesentlichen gitterförmige Bleielektroden mit einer pastösen, aktiven Masse versehen werden, umfassend wenigstens drei miteinander verbindbare, klimatisch stabilisierbare Volumina, eine Transporteinheit, um Bleiplatten von einer Aufgabeeinrichtung durch alle drei Volumina zu einer Entnahmeeinrichtung zu transportieren, sowie einer Steuerung und Stellgliedern für Umweltparameter wie Temperatur, Luftfeuchtigkeit und/oder Luftbewegung, wobei die drei Volumina en Reifungsvolumen, ein Vortrocknungsvolumen und en Endtrocknungsvolumen umfassen.

Die erfindungsgemäße Vorrichtung umfaßt wenigstens drei klimatisch stabilisierbare Volumina, die durch Klimakammern gebildet werden können. Die Volumina unterscheiden sich dabei wenigstens nach einem Reifungsvolumen, einem Vortrocknungsvolumen und einem Endtrocknungsvolumen. Diese sind so anzuordnen, daß sie beispielsweise über eine Klimaschleuse beladbar sind, wobei die Klimaschleuse mechanisch oder auch durch Strömungen gebildet werden kann, insbesondere dann, wenn die Kammern in kontinuierliche Fertigungsprozesse einbezogen werden. Durch eine Transportvorrichtung, Stahlband, Kette, Schienensystem oder dergleichen, werden die Platten durch jede Kammer mit vorgegebener Geschwindigkeit entlang von Wegen geführt, so daß eine Gesamtverweilzeit in der jeweiligen Kammer gewährleistet ist. Selbstverständlich sind auch Ruhezeiten in den Kammern denkbar. Die Platten verlassen die Kammern in die jeweils andere Kammer und werden dort dem nächstfolgenden Klimabereich ausgesetzt. Grundsätzlich ist es wünschenswert, daß die wenigstens drei Kammern miteinander verbindbar sind, sie können aber auch in aufeinanderfolgenden Bereichen angeordnet sein, wenn die Platten dazwischen in einem Ruheklima abgelagert werden können.

In vorteilhafter Weise umfaßt die Vorrichtung wenigstens eine Steuerung für Umweltbedingungen wie Temperatur, Luftfeuchtigkeit und/oder Luftbewegung. Auch die Steuerung weiterer Umweltparameter kann vorgesehen sein. Entsprechend werden natürlich die erforderlichen Stellglieder angesteuert, beispielsweise Heizungen, Dampfdüsen, Vakuumeinrichtungen, Saug- bzw. Blaseinrichtungen, Luftdüsen usw.

In vorteilhafter Weise wird vorgeschlagen, daß die Vorrichtung Tragkästen umfaßt, in welche mehrere pastierte Platten im wesentlichen parallel zueinander aber auch in dem erforderlichen Abstand und in der erforderlichen Ausrichtung zueinander aufstellbar sind. Mit diesem Tragkasten können dann ganze Gruppen gleichzeitig durch die Klimabereiche verfahren werden.

Mit der Erfindung wird schließlich eine insbesondere hinsichtlich einer überaus guten Gitter/Massen-Verbindung und hinsichtlich einer hohen Masse Festigkeit neuartige Platte für Bleiakkumulatoren bereitgestellt.

Das erfindungsgemäße Verfahren und die erfindungsgemäße Vorrichtung sind einfach und wirtschaftlich durchführbar und vereinfachen und verbessern das Herstellungsverfahren in technischer und wirtschaftlicher Hinsicht erheblich.

Weitere Vorteile und Merkmale der Erfindung ergeben sich aus der folgenden Beschreibung anhand der Figuren. Dabei zeigen:
- Fig. 1: eine schematische Darstellung eines Ausführungsbeispiels für eine Bleiplattenbehandlungseinheit;
- Fig. 2: Eine schematische Detaildarstellung des in Fig. 1 gezeigten Transportbandes für die Endtrocknungsphase;
- Fig. 3: Eine Seitenansicht eines Ausführungsbeispiels für eine Trageinheit und
- Fig. 4: eine Frontansicht der Trageinheit gemäß Fig. 3.

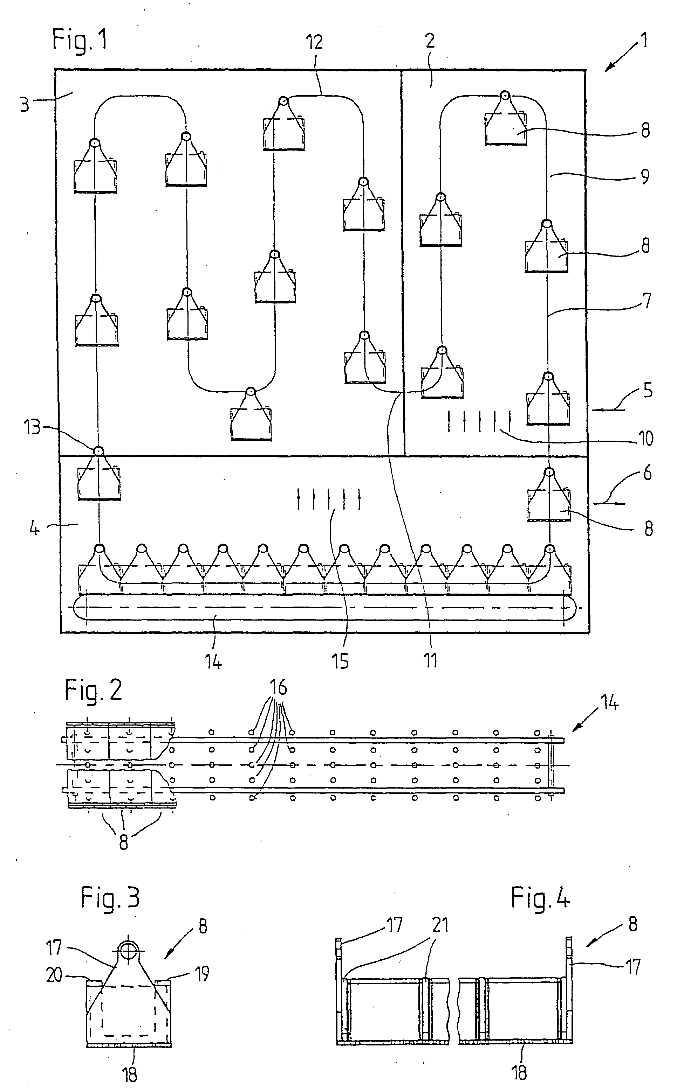

In Fig. 1 ist eine Behandlungseinheit 1 gezeigt, welche im gezeigten Ausführungsbeispiel eine Reifungskammer 2, eine Vortrocknungskammer 3 und eine Endtrocknungskammer 4 umfaßt. Die Reifungskammer 2 ist über den Aufgabebereich 5 zugänglich, während die Entladung über den Entladebereich 6 am Ende der Endtrocknungskammer 4 erfolgt.

Über den Aufgabebereich 5 werden Transportkästen 8 an der Transporteinheit 7 befestigt, beispielsweise ein umlaufendes Schienen-, Ketten-, Seilsystem oder dergleichen. Die Transportkästen 8 bewegen sich dann zunächst über den Transportweg 9 mit einer vorgegebenen Geschwindigkeit durch die Reifungskammer 2. Im gezeigten Ausführungsbeispiel werden die Kästen 8 vertikal im Paternostersystem bis zur Übergabe 11 bewegt, während vom Boden über den Dampfeinlaß 10 Dampf in die Reifungskammer 2 geführt wird. Eine Luftströmung wird nicht erzeugt. Die in den Kästen 8 aufrechtstehenden aber zueinander beabstandeten Platten werden somit an allen Oberflächen zugänglich vom Dampf beaufschlagt. Nach dem Verlassen der Reifungskammer 2 an der Übergabe 11 gelangen die Platten in die Vortrocknungskammer 3, wo sie entlang des Transportweges 12 bis zur Übergabe 13 geführt werden. Über nichtgezeigte Vorrichtungen wird eine Luftströmung, gegebenenfalls eine Frischluftzufuhr durchgeführt. Nach der Übergabe 13 gelangt der Kasten in die Endtrocknungskammer 4, wo eine gezielte Oberflächenanströmung mit Luft erfolgt. In allen Kammern wird durch nicht gezeigte Mittel die Temperatur eingestellt und geregelt, gegebenenfalls über die Luft, den Dampf oder dergleichen. Im gezeigten Ausführungsbeispiel erfolgt eine gezielte Luftströmung über das Transportband 14, welches, wie Fig. 2 zeigt, Luftdüsen 16 aufweist, durch welche die Luft im Luftstrom 15 die Plattenoberflächen gezielt bestreichen kann.

Wie die Fign. 3 und 4 zeigen umfassen die Kästen 8 eine Seitenwand 17 und einen Boden 18, gegebenenfalls an einer weiteren Seite eine nichtgezeigte Rückwand. Auf jeden Fall ist eine Seite offen, so daß die positiven und negativen Platten 19, 20 von einer Vorderseite in den Kasten einsetzbar sind. In einem Ausführungsbeispiel können zwischen den Platten 19, 20 Abstandshalter 21 eingesetzt sein, um die Oberflächen für die Klimabehandlung freizuhalten.

Die gezeigten und beschriebenen Ausführungsbeispiele dienen der Erläuterung und sind nicht beschränkend. Insbesondere sind die Kammern in einer kombinierten über- und nebeneinander angeordneten Weise gezeigt. Darüber hinaus sind die Kammern so gezeigt, daß sie direkt ineinander übergehen. Die räumliche Anordnung der Kammern zueinander liegt im Belieben des Fachmannes ebenso wie die direkt aneinander anschließende Anordnung. Es können auch weitere Kammern, zusätzliche Ruhekammern, Zwischenlagerkammern und dergleichen vorgesehen sein.

### Bezugszeichenliste

- 1: Behandlungseinheit
- 2: Reifungskammer
- 3: Vortrocknungskammer
- 4: Endtrocknungskammer
- 5: Aufgabebereich
- 6: Entladebereich
- 7: Transporteinheit
- 8: Transportkasten
- 9: Transportweg
- 10: Dampfeinlaß
- 11: Übergabe
- 12: Transportweg
- 13: Übergabe
- 14: Transportband
- 15: Luftstrom
- 16: Luftdüsen
- 17: Seitenwand
- 18: Boden
- 19: Platte
- 20: Platte
- 21: Abstandshalter

## Patentansprüche

1. Verfahren zur Herstellung von Bleiplatten für Bleiakkumulatoren, wobei im wesentlichen gitterförmige Bleielektroden mit einer pastösen, aktiven Masse versehen werden, wobei die Platten bei jeweils festgelegten umwelt parametern wie Zeit, Luftfeuchtigkeit, Temperatur und/oder relative Luftbewegung und bei jeweils weniger als 6 Std. in einem kontinuierlichen Durchlauf in drei voneinander getrennten Bereichen
a) einen Reifungsprozeß unter Feuchtigkeitszuführung,
b) einen Vortrocknungsprozeß zur Reduzierung des freien Bleis in den pastösen Massen und
c) anschließend einen Endtrocknungsvorgang durchlaufen,
dadurch gekennzeichnet,
daß der Vortrocknungsprozeß bei gegenüber dem Reifungsprozeß verringerter Luftfeuchtigkeit erfolgt, daß beide Plattenoberflächen für eine gleichmäßige Behandlung freiliegend gehalten werden und daß beide Oberflächen der Platten mit einer klimawirksamen Membran versehen werden, welche Feuchtigkeit transportieres und speichern kann und die Platten oberfläche gegen direkte Luftbewegung abschirmt.

2. Verfahren nach Anspruch 1, dadurch gekennzeichnet, daß in dem Verfahrensschritt des Reifungsprozesses keine Luftbewegung um die Platten erzeugt wird.

3. Verfahren nach einem der vorhergehenden Ansprüche, dadurch gekennzeichnet, daß im Verfahrensschritt des Reifungsprozesses die Platten einer Atmosphäre mit nahezu 100% Luftfeuchtigkeit, gebildet durch vorzugsweise vom Boden des Bereiches zugeführtem Sattdampf, ausgesetzt werden.

4. Verfahren nach einem der vorhergehenden Ansprüche, dadurch gekennzeichnet, daß die Bleiplatten im Verfahrensschritt des Reifungsprozesses etwa 1. Std., vorzugsweise unter zusätzlicher Direktversorgung mit Feuchtigkeit, Temperaturen zwischen 50 und 95°C ausgesetzt werden.

5. Verfahren nach einem der vorhergehenden Ansprüche, dadurch gekennzeichnet, daß die Platten während des Verfahrensschrittes des Vortrocknungsprozesses für eine Zeitdauer ≤ 3 Std. mit einer Luftströmung einer Atmosphäre mit niedriger relativer Luftfeuchtigkeit beaufschlagt werden.

6. Verfahren nach einem der vorhergehenden Ansprüche, dadurch gekennzeichnet, daß die Platten während des Verfahrensschrittes der Endtrocknung für eine Zeitdauer < 60 Minuten mit einer vorzugsweise gerichteten Luftströmung von 0,5 bis 10 m/sec., vorzugsweise 2 bis 3 m/sec., bei einer Temperatur von 40 bis 90°C, vorzugsweise um 80°C beaufschlagt werden.

7. Verfahren nach einem der vorhergehenden Ansprüche, dadurch gekennzeichnet, daß die Platten durch klimatisch stabilisierte Bereiche geführt werden.

8. Verfahren nach einem der vorhergehenden Ansprüche, dadurch gekennzeichnet, daß die in dem jeweiligen klimatischen Bereich vorgesehene Verweilzeit durch Wegstrecken und Transportgeschwindigkeiten festgelegt werden und die Platten mittels einer Tragvorrichtung durch die Klimabereiche geführt werden.

9. Verfahren nach einem der vorhergehenden Ansprüche, dadurch gekennzeichnet, daß die Platten gruppiert in Einheiten von mehreren Platten im wesentlichen parallel und mit Abstand zueinander angeordnet werden.

10. Verfahren nach einem der vorhergehenden Ansprüche, dadurch gekennzeichnet, daß als klimawirksame Membranen Batterieseparatoren in Blatt- oder Taschenform, vorzugsweise aus PE-Folie, verwendet werden.

11. Verfahren nach einem der vorhergehenden Ansprüche, dadurch gekennzeichnet, daß die Platten vor oder während des Herstellungsverfahrens zu Akkumulator-Bestückungssätzen gruppiert und miteinander verbunden werden.

12. Verfahren nach einem der vorhergehenden Ansprüche, dadurch gekennzeichnet, daß die Membranen vor Beginn des Reifungsprozesses befeuchtet werden.

13. Vorrichtung zur Herstellung von Bleiplatten für Bleiakkumulatoren, wobei im wesentlichen gitterförmige Bleielektroden mit einer pastösen, aktiven Masse versehen werden, umfassend wenigstens drei miteinander verbindbare, klimatisch stabilisierbare Volumina, eine Transporteinheit, um Bleiplatten von einer Aufgabeeinrichtung durch alle drei Volumina zu einer Entnahmeeinrichtung zu transportieren, sowie einer Steuerung und Stellgliedern für Umweltparameter wie Temperatur, Luftfeuchtigkeit und/oder Luftbewegung,
**dadurch gekennzeichnet**,
daß die drei Volumina ein Reifungsvolumen, ein Vortrocknungsvolumen und ein Endtrocknungsvolumen umfassen.

14. Vorrichtung nach Anspruch 13, dadurch gekennzeichnet, daß die Transportvorrichtung eine umlaufend angetriebene Trageinheit sowie Tragkästen zum Einsetzen mehrerer im wesentlichen parallel und mit Abstand zueinander angeordneter Platten umfaßt.

15. Vorrichtung nach einem der Ansprüche 13 bis 14, dadurch gekennzeichnet, daß diese gerichtete Luftdüsen umfaßt.

## Claims

1. Process for the manufacture of lead plates for lead-acid batteries in which lead electrodes essentially in the form of grids are provided with a pasty active composition and the plates pass continuously through the following three areas which are separate from one another, with ambient parameters such as time, atmospheric humidity, temperature and/or relative air movement that are fixed in each case and over less than 6 hours in each case
a) a maturing process with moisture being fed in,
b) a preliminary drying process for reducing the free lead in the pasty compositions and
c) subsequently a final drying process,
characterized in that the preliminary drying process takes place with reduced atmospheric humidity in comparison with the maturing process, in that both surfaces of the plates are kept exposed for uniform treatment and in that both surfaces of the plates are provided with a climatically effective membrane which can transport and store moisture and which shields the plate surface against direct air movement.

2. Process according to Claim 1, characterized in that, in the process step of the maturing process, no air movement is produced around the plates.

3. Process according to one of the preceding claims, characterized in that, in the process step of the maturing process, the plates are exposed to an atmosphere with virtually 100% atmospheric humidity, formed by saturated steam fed in preferably from the bottom of the area.

4. Process according to one of the preceding claims, characterized in that, in the process step of the maturing process, the lead plates are exposed to temperatures between 50 and 95°C for approximately 1 hour, preferably with additional moisture being directly supplied.

5. Process according to one of the preceding claims, characterized in that, during the process step of the preliminary drying process, the plates are subjected to an air flow of an atmosphere with low relative atmospheric humidity for a time period of < 3 hours.

6. Process according to one of the preceding claims, characterized in that, during the process step of the final drying, the plates are subjected to a preferably directed air flow of 0.5 to 10 m/sec., preferably 2 to 3 m/sec., at a temperature of 40 to 90°C, preferably around 80°C, for a time period of < 60 minutes.

7. Process according to one of the preceding claims, characterized in that the plates are passed through climatically stabilized areas.

8. Process according to one of the preceding claims, characterized in that the dwell time envisaged in the respective climatic area is fixed by displacement distances and transporting speeds and the plates are passed through the climatic areas by means of a carrying device.

9. Process according to one of the preceding claims, characterized in that the plates are arranged such that they are grouped in units comprising a plurality of plates essentially parallel to and at a distance from one another.

10. Process according to one of the preceding claims, characterized in that battery separators in the form of sheets or pockets, preferably made of PE film, are used as climatically effective membranes.

11. Process according to one of the preceding claims, characterized in that the plates are grouped with and connected to one another to form battery assembly sets before or during the production process.

12. Process according to one of the preceding claims, characterized in that the membranes are moistened before the beginning of the maturing process.

13. Apparatus for the manufacture of lead plates for lead-acid batteries in which lead electrodes essentially in the form of grids are provided with a pasty active composition, comprising at least three volumes which can be climatically stabilized and can be connected to one another, a transporting unit to transport lead plates from a charging device through all three volumes to a removing device, and also a controller and actuating elements for ambient parameters such as temperature, atmospheric humidity and/or air movement, characterized in that the three volumes comprise a maturing volume, a preliminary drying volume and a final drying volume.

14. Apparatus according to Claim 13, characterized in that the transporting device comprises a carrying unit driven in a circulating manner and also carrying cases for the insertion of a plurality of plates arranged essentially parallel to and at a distance from one another.

15. Apparatus according to either of Claims 13 and 14, characterized in that it comprises directed air nozzles.

## Revendications

1. Procédé de fabrication de plaques de plomb pour des accumulateurs au plomb, dans lequel on munit des électrodes au plomb globalement en forme de grilles d'une masse pâteuse active, dans lequel on fait passer les plaques en continu, pour des paramètres environnementaux respectivement fixés comme le temps, l'humidité de l'air, la température et/ou les déplacements d'air relatifs et pour à chaque fois moins de 6 heures, dans trois zones séparées l'une de l'autre,
a) par un processus de maturation sous amenée d'humidité,
b) par un processus de préséchage pour réduire le plomb libre dans les masses pâteuses, et
c) ensuite par une opération de séchage final,
caractérisé en ce que
le processus de préséchage s'effectue avec une humidité d'air réduite par rapport au processus de maturation, en ce qu'on tient dégagées deux surfaces de plaques pour un traitement uniforme et en ce qu'on munit les deux surfaces des plaques d'une membrane à action climatique qui peut transporter et stocker de l'humidité et qui protège les surfaces de plaques contre des déplacements d'air directs.

2. Procédé selon la revendication 1, caractérisé en ce que, pendant l'étape du procédé correspondant au processus de maturation, on ne produit pas de déplacement d'air autour des plaques.

3. Procédé selon l'une des revendications précédentes, caractérisé en ce que, pendant l'étape du procédé correspondant au processus de maturation, on soumet les plaques à une atmosphère avec presque 100 % d'humidité d'air, formée par une vapeur saturée envoyée de préférence du sol de la zone.

4. Procédé selon l'une des revendications précédentes, caractérisé en ce que, pendant l'étape du procédé correspondant au processus de maturation, on soumet les plaques de plomb pendant environ 1 heure, de préférence avec une alimentation directe supplémentaire en humidité, à des températures comprises entre 50 et 95 °C.

5. Procédé selon l'une des revendications précédentes, caractérisé en ce que, pendant l'étape du procédé correspondant au processus de préséchage, on soumet les plaques pour une durée inférieure ou égale à 3 heures, à un courant d'air d'une atmosphère ayant une humidité d'air relative faible.

6. Procédé selon l'une des revendications précédentes, caractérisé en ce que, pendant l'étape du procédé correspondant au séchage final, on soumet les plaques pour une durée inférieure à 60 minutes, à un courant d'air, orienté de préférence, de 0,5 à 10 m/s, de préférence de 2 à 3 m/s, à une température de 40 à 90 °C, de préférence autour de 80 °C.

7. Procédé selon l'une des revendications précédentes, caractérisé en ce qu'on fait passer les plaques à travers des zones stabilisées du point de vue climatique.

8. Procédé selon l'une des revendications précédentes, caractérisé en ce qu'on fixe le temps de séjour prévu dans la zone climatique respective au moyen de parcours et de vitesses de transport et en ce qu'on transporte les plaques à travers les zones climatiques au moyen d'un dispositif porteur.

9. Procédé selon l'une des revendications précédentes, caractérisé en ce qu'on agence les plaques groupées en unités de plusieurs plaques globalement parallèlement et à une certaine distance les unes des autres.

10. Procédé selon l'une des revendications précédentes, caractérisé en ce qu'on utilise comme membranes à action climatique des séparateurs de batterie sous forme de feuilles ou de poches, de préférence en feuilles de polyéthylène.

11. Procédé selon l'une des revendications précédentes, caractérisé en ce qu'on groupe les plaques avant ou pendant le procédé de fabrication en blocs d'équipement d'accumulateur et on les assemble entre elles.

12. Procédé selon l'une des revendications précédentes, caractérisé en ce qu'on humidifie les membranes avant le début du processus de maturation.

13. Dispositif de fabrication de plaques de plomb pour des accumulateurs au plomb, dans lequel des électrodes au plomb globalement en forme de grilles sont munies d'une masse pâteuse active et qui comprend au moins trois volumes pouvant être reliés entre eux et pouvant être stabilisés du point de vue climatique, une unité de transport pour transporter des plaques de plomb d'un dispositif d'alimentation à travers l'ensemble des trois volumes vers un dispositif d'enlèvement, ainsi qu'une commande et des organes de réglage pour des paramètres environnementaux comme la température, l'humidité de l'air et/ou les déplacements d'air,
caractérisé en ce que
les trois volumes comprennent un volume de maturation, un volume de préséchage et un volume de séchage final.

14. Dispositif selon la revendication 13,
caractérisé en ce que le dispositif de transport comprend une unité porteuse entraînée en révolution ainsi que des caisses porteuses pour placer plusieurs plaques agencées parallèlement et à une certaine distance les unes des autres.

15. Dispositif selon l'une des revendications 13 à 14, caractérisé en ce qu'il comprend des buses d'air orientées.
